# EUROPEAN PATENT APPLICATION

(11) **EP 0 746 137 A2**
(43) Date of publication of application: **04.12.1996**
(21) Application number: 96108060.3
(22) Date of filing: 21.05.1996
(51) Int. Cl.: H04M 17/02

(54) **Payphone management system**

(30) Priority: 29.05.1995 AU PN3199/95
(71) Applicant: ALCATEL N.V., NL-2288 BH Rijswijk (NL)
(72) Inventor: Jamons, Nicholas, Newtown, 2042 New South Wales (AU)
(74) Representative: Pohl, Herbert, Dipl.-Ing

(57) **Abstract**

A payphone management system having at least one payphone (1) having a plurality of operating functions (6, 7, 8, 9, 10, 11 and 12). The payphone is connected via a link (3) too remote control centre (2). The control centre is connected via trunks (4) to a PSTN. According to the invention all processing and enabling of the payphone's operating functions is carried out in a processor (14) located in the control centre.

The advantages of the system are that modifications to the payphones operating functions can be carried out remotely. Moreover, such "non-intelligent" payphones does not require complex circuitry and relatively large processing ability.

## Description

This invention relates to payphones and in particular to a payphone management system wherein processing of the main functions of the payphone is carried out at a control centre remote from the payphone and PSTN.

Payphones are known which locally incorporate complex circuitry and relatively large processing means to perform functions such as, for example, revenue collection, signaling, and displaying prompts.

Such payphones are sometimes referred to as "intelligent" payphones.

A disadvantage of the known intelligent payphone is that in order to modify any function, a technician must visit the site of the payphone, or data must be downloaded via a link.

Another disadvantage of the known intelligent payphone is that such payphones require relatively complex circuitry and large processing ability.

It is an object of the present invention to provide a payphone system which avoids the aforementioned disadvantages.

According to the invention there is provided a payphone management system comprising at least one payphone having a plurality of operating function means, said payphone being coupled, via link means, to a control means remote from said payphone, said control means being connected via trunk means, to a PSTN remote therefrom, wherein said control centre includes a central processor means for processing and enabling said operating functions means of said payphone.

In order that the invention may be readily carried into effect, an embodiment thereof will now be described in relation to the accompanying drawings, in which:
Figure 1 is a block schematic of the payphone system of the present invention.

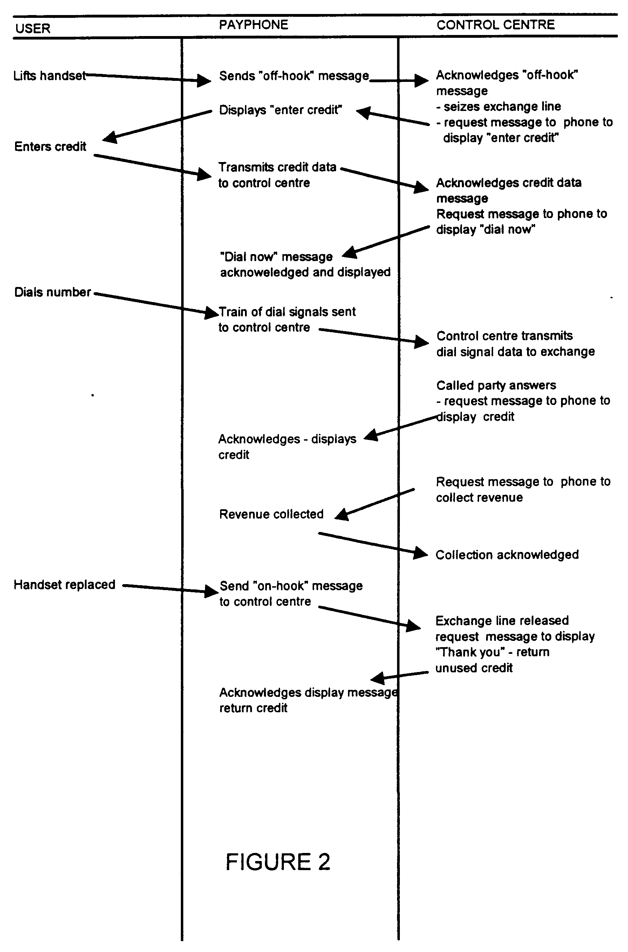

Figure 2 is an operation diagram showing typical actions executed by the system to establish a connexion, via the PSTN, between the user of the payphone and a called subscriber of the PSTN.

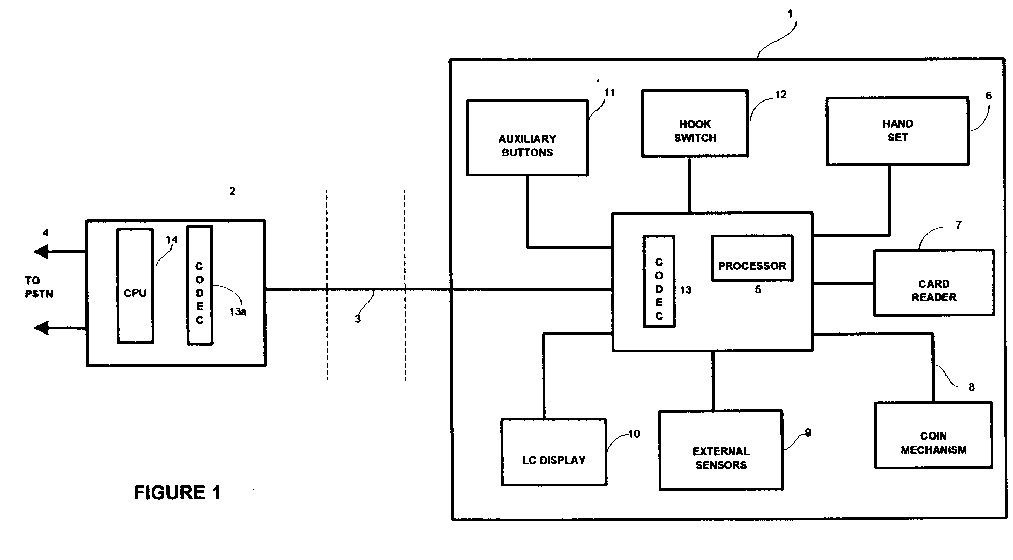

Referring to Figure 1, the system comprises a payphone 1 linked to a control centre 2, remote from the payphone and a PSTN via a pair of conductors 3. Control centre 2 is linked to the PSTN (not shown) via a plurality of junctions 4. Payphone 1 comprises a local processor 5 to whose inputs/outputs are coupled the elements of the payphone consisting of a handset 6; a card reader 7; a coin mechanism 8; at least one external sensor means 9 such as, for example, a "door opened" sensor; a LC display 10, auxiliary buttons 11; a hook-switch 2 and a codec 13.

Processor 5 registers the states of the various aforementioned elements. Codecs 13 and 13a allow the local processor 5 to communicate with the main processor 14 in the control centre 2.

The operation diagram shown in Figure 4 illustrates the use of the system.

The user lifts the payphone's handset causing processor 5 to send an off-hook signal to the control centre 2. After acknowledgement the control centre seizes exchange equipment at the PSTN via a free junction and also transmits data to the payphone to cause the LC display 10 to display a message "Enter Credit". The user inserts a phone-card into card reader 7, or coin into coin mechanism 8. The payphones local processor 5 sends data relating to the entered credit to the control centre where it is checked and acknowledged. The control centre then transmits data to the payphone to cause the payphone's LC display 10 to display the prompt "Dial now". The payphone acknowledges and displays the prompt.

The user dials the number of the required subscriber of the PSTN and the train of dial signals are transmitted from the payphone to the control centre. The control centre transmits data representing the train of dial signals to the PSTN. When the called party answers the control centre transmits data to the payphone to cause the payphones LC display to display credit which is acknowledged by the payphone. The control centre then transmits data to cause revenue to be collected.

At the completion of the call, the user replaces the handset whereupon the payphone transmits data to the control centre to indicate that the payphone is "on-hook". The control centre releases the exchange line and transmits data to the payphone to cause the payphone's LC display to display "Thank-you", and also data to return any credit.

While the present invention has been described with regard to many particulars, it is understood that equivalents may be readily substituted without departing from the scope of the invention.

## Claims

1. A payphone management system comprising at least one payphone having a plurality of operating function means, said payphone being coupled, via link means, to a control means remote from said payphone, said control means being connected via trunk means, to a PSTN remote therefrom, wherein said control centre includes a central processor means for processing and enabling said operating functions means of said payphone.

2. A system as claimed in claim 1, wherein said payphone operating function means include, auxiliary button means, hook switch means, handset means, card reader means, coin mechanism means and display means.

3. A system as claimed in claim 2, wherein said operating function means states are registered by a local processor means, said local processor means being coupled to said control means via said link means.

4. A system as claimed in claim, 3, wherein said link means includes coder-decoder means for enabling communication between said local processor and said control processor.

5. A system substantially as herein described with reference to Figures 1 - 2 or the accompanying drawings.
